# EUROPÄISCHE PATENTSCHRIFT

(11) **EP 1 857 271 B1**
(45) Veröffentlichungstag und Bekanntmachung des Hinweises auf die Patenterteilung: **03.08.2011**
(21) Anmeldenummer: 07009172.3
(22) Anmeldetag: 06.06.2003
(51) Int. Cl.: B32B 27/32, B32B 27/34, A22C 13/00

(54) **Mehrschichtige flächen- oder schlauchförmige Nahrungsmittelfolie**
Multilayer planar or tubular food film
Feuille multicouche, planiforme ou tubulaire, pour denrées alimentaires

(30) Priorität: 20.06.2002 DE 10227580
(43) Veröffentlichungstag der Anmeldung: 21.11.2007
(62) Teilanmeldung aus: 03738004.5
(73) Patentinhaber: KUHNE ANLAGENBAU GmbH, 53757 St. Augustin/Menden (DE)
(72) Erfinder: Schief, Hermann-Josef, 53359 Rheinbach (DE); Schiffmann, Jürgen Michael, 53773 Hennef-Rott (DE)
(74) Vertreter: Kuhnen & Wacker

(56) Entgegenhaltungen:
- EP-A- 0 530 538
- EP-A- 0 879 560
- EP-A- 0 981 963
- WO-A-01/90202
- US-A- 4 469 742
- US-A- 4 762 748
- US-A- 5 047 253
- US-A- 5 972 444
- US-B1- 6 291 041
- US-B1- 6 406 763

## Beschreibung

Die vorliegende Erfindung betrifft eine mehrschichtige flächen- oder schlauchförmige Nahrungsmittelfolie für Schrumpfbeutel, nach dem Oberbegriff des Anspruchs 1.

Aus der DE 32 12 343 A1 ist eine schlauchförmige Verpackungshülle aus zweilagigem Folienlaminat bekannt geworden.

Ferner ist eine mehrschichtige, schlauchförmige Verpackungshülle für pastöses Füllgut, insbesondere eine künstliche Wursthülle, auf Basis von Polyamid in der DE 40 17 046 A1 als auch in der EP 0 467 039 A2 diskutiert.

Aus der US-5972 444 ist eine Schrumpffähige mehrschichtige Nahrungsmittelhülle bekannt.

In der Praxis werden derartige Wursthüllen oder Kunstdarm zum Verpacken von Wurst oder pastösen Dingen eingesetzt. Das zu verpackende Produkt, wie beispielsweise eine Wurstmasse, wird in den Kunstdarm gefüllt, darin gebrüht, gekühlt und gelagert. Daraus ergeben sich Anforderungen, wie beispielsweise eine ausgeprägte Dimensionsstabilität über den gesamten Verarbeitungsprozeß oder ein ausreichender Schutz des Füllgutes vor äußeren Einflüssen, wie beispielsweise Sauerstoffzutritt, UV-Strahlung, Austrocknung oder dergleichen.

Die aus der Praxis bekannten klassischen Wursthüllen können grob in drei Typen unterteilt werden: Die klassische einschichtige Wursthülle aus Polyamid, deren wesentlicher Nachteil die fehlende Wasserdampfsperre ist. Die vielfach verwendete Wursthülle aus drei Schichten, welche von außen nach innen betrachtet Polyamid, Polyolefin, vorzugsweise Polyethylen, Polyamid enthalten. Die bei der einschichtigen Wursthülle fehlende Wasserdampfbarriere wird durch die mittlere Polyolefinschicht gebildet. Die innere Schicht aus Polyamid sorgt für eine ausreichende Bräthaftung und dafür, daß es zu keiner Ausfällung oder Absetzung von Gelee kommt. Dabei kann diese Polyamidschicht auch durch eine entsprechend vorbehandelte (Corona) PE-Schicht ersetzt werden, wobei dann die PE-Schicht modifiziert werden muß, um eine zufriedenstellende Verbindung mit dem PA einzugehen. In der jüngeren Zeit haben sich Wursthüllen mit fünf Schichten in der Praxis bewährt. Die von außen nach innen gezählten fünf Schichten enthalten PA, einen Haftvermittler, PE, einen Haftvermittler und zuletzt wieder PA. Dieser Aufbau entspricht vom Ansatz her der Wursthülle aus drei Schichten, weist jedoch jeweils zwischen PA und PE bzw. PE und PA eine separate Klebeschicht bzw. einen separaten Haftvermittler auf. Dadurch kann man die mittlere Polyolefin-Schicht in Bezug auf die verwendeten Rohstoffe oder Mischungen stärker variieren.

Ungeachtet dessen sind die mechanischen Eigenschaften, wie beispielsweise die maximale Schrumpfrate oder der erzielbare Überdehnungsfaktor, beispielsweise für ein uni- oder ein bi-direktionales Verstrecken, bei diesen aus der Praxis bekannten mehrschichtigen flächen- oder schlauchförmigen Nahrungsmittelhüllen oder -folien immer noch unzureichend. Nicht zuletzt sind die damit verfügbare Sauerstoffbarriere als auch die Wasserdampfsperre noch nicht ausreichend dicht ausgebildet.

Dementsprechend ist es Aufgabe der vorliegenden Erfindung - unter Vermeidung der vorstehenden Nachteile - eine gattungsgemäße mehrschichtige flächen- oder schlauchförmige Nahrungsmittelfolie derart weiterzubilden, daß eine ausreichend dichte Sauerstoffbarriere bei einer zufriedenstellenden Schrumpfrate als auch einem akzeptablen Überdehnungsfaktor zur Verfügung gestellt werden kann.

Diese Aufgabe wird gelöst durch die Merkmale des Anspruchs 1.

Erfindungsgemäß wird hierbei eine mehrschichtige flächen- oder schlauchförmige Nahrungsmittelfolie für Schrumpfbeutel vorgeschlagen, deren von außen nach innen gezählter Schichtenaufbau erstmalig wenigstens sieben Schichten aufweist. Dabei enthält:
a) die erste Schicht von außen als Schichtbestandteil ein Polyolefin, vorzugsweise Polyethylen, die zweite Schicht einen Haftvermittler, die dritte Schicht Polyamid, die vierte Schicht EVOH, die fünfte Schicht Polyamid, die sechste Schicht einen Haftvermittler, und die siebte Schicht von außen, die zugleich die innerste Schicht ist, ein Polyolefin, vorzugsweise Polyethylen,
oder b) die erste Schicht von außen als Schichtbestandteil PET, die zweite Schicht einen Haftvermittler, die dritte Schicht Polyamid, die vierte Schicht EVOH, die fünfte Schicht Polyamid, die sechste Schicht einen Haftvermittler, und die siebte Schicht von außen, die zugleich die innerste Schicht ist, ein Polyolefin, vorzugsweise Polyethylen,
oder c) die erste Schicht von außen als Schichtbestandteil ein Polyolefin, vorzugsweise Polyethylen, die zweite Schicht EVA, die dritte Schicht einen Haftvermittler, die vierte Schicht EVOH, die fünfte Schicht einen Haftvermittler, die sechste Schicht EVA, und die siebte Schicht von außen, die zugleich die innerste Schicht ist, ein Polyolefin, vorzugsweise Polyethylen.

Dabei beträgt der Schrumpf der Schichtenaufbauten (a), (b) und (c) jeweils wenigstens 20 bis 60 %, vorzugsweise wenigstens 30 bis 50 %, bei einer Wassertemperatur von um 95 °C.

Hierbei ergibt in vorteilhafter Weise EVOH die gewünschte Barriere. Das PA ermöglicht die Sicherstellung der gewünschten mechanischen Eigenschaften. Mit dem PE kann positiv auf die Siegelbarkeit eingewirkt werden. Ferner erhält man mit EVA einen hohen Schrumpf als auch eine weitere Beeinflußbarkeit der mechanischen Eigenschaften, wobei hierzu ergänzend eine Elektronenstrahl-Behandlung vorzusehen ist.

Dabei umfassen die Polyolefine sowohl PE als auch EVA im Sinne dieser Anmeldung sowie Mischungen von Polyolefinen als solchen als auch mit Ionomeren. Die Haftvermittler (kurz: HV) stehen für eine Klebeschicht. Unter EVOH soll sowohl EVOH als auch Mischungen von EVOH mit anderen Polymeren verstanden werden. Ferner steht PA allgemein für PA sowie für PA 6, PA 66, PA 6/66, PA 6/12 oder dergleichen als auch für Mischungen hiervon sowie für Mischungen von PA mit anderen Polymeren. Weiterhin steht EVA gleichsam für EVA als auch für Mischungen von EVA mit Polymeren.

Damit wird in vorteilhafter Weise eine Nahrungsmittelfolie für Schrumpfbeutel geschaffen, mit der ein besonders hoher Schrumpf erzielbar ist, der wenigstens 20 bis 60 %, vorzugsweise wenigstens 30 bis 50 %, bei einer Wassertemperatur von um 95°C beträgt.

Der zugleich damit verfügbare Überdehnungsfaktor liegt bei den erfindungsgemäßen Schrumpfbeuteln bei wenigstens 5 bis 15 %, vorzugsweise bei 10 bis 12 %.

Für die bei Schrumpfbeuteln vorzusehenden Siegelschichten auf der Innen- und/oder Außenseite kann bei den erstmalig vorgeschlagenen Schichtaufbauten vorteilhaft als Rohstoff beispielsweise ein Polyolefin, vorzugsweise PE, LLDPE, EVA oder Ionomere oder Mischungen hiervon oder dergleichen vorgesehen werden.

Die erfindungsgemäße Nahrungsmittelfolie eignet sich u. a. besonders gut als Wursthülle, da deren innerste Schicht bei den hierfür erstmals vorgeschlagenen Schichtaufbauten eine besonders gute Bräthaftung zur Wurstmasse aufweist.

Aufgrund der durch den Schichtbestandteil EVOH erzielten, besonders ausgeprägten Sauerstoffbarriere ist eine hervorragende Haltbarkeit der damit verpackten Lebensmittel, insbesondere einer in der Wursthülle befindlichen Wurstmasse über mehr als sechs Wochen ohne jegliche Qualitätsminderung gewährleistet.

Dank der extrem gut ausgebildeten Sauerstoffbarriere steht mit der erfindungsgemäßen Nahrungsmittelfolie erstmals eine Lebensmittelverpackung zur Verfügung, mit der auch besonders luftempfindliche Güter selbst bei langen Lagerzeiten beispielsweise keiner farblichen Veränderung unterzogen sind oder gar Gefahr laufen, durch Eintritt von Sauerstoff zu altern oder ihren Geschmack zu verändern.

So wird der Schichtbestandteil EVOH bei einem bevorzugten Schichtaufbau ähnlich einem Sandwich zwischen zwei Schichten mit Polyamid als Schichtbestandteil eingebettet, was zu einer möglichst hohen Sauerstoffbarriere führt und zugleich eine hervorragende Einbettung und Stabilisierung der EVOH-Schicht zwischen die beiden Polyamid-Schichten als Trägerschichten gewährleistet.

Zugleich steht eine hervorragende Wasserdampfbarriere zur Verfügung, was insbesondere bei Wurst oder anderen Lebensmitteln, die frischhaltebedürftig sind, entscheidend ist. Mit der erfindungsgemäßen Nahrungsmittelfolie verpackte Lebensmittel bleiben deshalb besonders lange frisch.

Aufgrund der niedrigen Wasserdampfdurchlässigkeit bleiben die Gewichtsverluste beim Lagern der Lebensmittel und insbesondere beim Lagern von Wurst besonders gering. Gerade Wurst zeigt mit dem erfindungsgemäßen Schrumpfbeutel verpackt auch nach langer Lagerung eine faltenfreie, eng anliegende Hülle. Dabei entstehen zwischen der Wurstmasse und der innersten Schicht des Schrumpfbeutels aufgrund der besonders guten Bräthaftung keinerlei Zwischenräume in denen sich Gelee aus der Wurstmasse absetzen könnte.

Ferner eignet sich die erfindungsgemäße Nahrungsmittelfolie als Schrumpffolie und kann beim Verkleben auch gut gesiegelt werden.

Die äußerste Schicht der erstmalig vorgeschlagenen Nahrungsmittelfolie ist besonders gut beschrift- oder bedruckbar.

Darüber hinaus läßt sich die erfindungsgemäße Nahrungsmittelfolie besonders gut mit entsprechenden Anlagen der selben Anmelderin herstellen und weiter verarbeiten.

Vorteilhafte Weiterbildungen der Erfindung ergeben sich aus den Merkmalen der Unteransprüche.

So ist es bei einer bevorzugten Ausführungsform der erfindungsgemäßen Nahrungsmittelfolie für Lebensmittelverpackungen vorgesehen, daß Schichten, die Polypropylen oder Polyolefin als Schichtbestandteil enthalten, alternativ auch Polypropylen, EVA (Ethylen-Vinyl-Acetat), EM(M)A, Ionomere oder Mischungen von diesen oder dgl. enthalten.

Weiterhin ist in einer bevorzugten Ausführungsform vorgesehen, daß Schichten, die einen Haftvermittler enthalten, einen Haftvermittler aufweisen, der auf PE, EVA, EM(M)A oder einem Ionomer als Grundstoff basiert.

Gemäß einer weiter bevorzugten Ausführungsform ist vorgesehen, daß Schichten, die einen Haftvermittler als Bestandteil aufweisen, alternativ ein Gemisch aus Polyolefin und Haftvermittler oder ein Gemisch aus EVA und/oder EM(M)A und Haftvermittler enthalten.

Nicht zuletzt ist gemäß einer bevorzugten Ausführungsform vorgesehen, daß Schichten, die Polyamid als Schichtbestandteil aufweisen, Polycaprolactam (PA 6), Polyhexamethylenadipinamid (PA 66), PA 6/66, PA 11, PA 12 oder Mischungen aus diesen Polyamiden oder dgl. enthalten.

Mit der vorliegenden Erfindung wird damit erstmals eine flächen- oder schlauchförmige Nahrungsmittelfolie für Schrumpfbeutel mit einem wenigstens siebenschichtigen Schichtaufbau vorgeschlagen.

## Patentansprüche

1. Mehrschichtige flächen- oder schlauchförmige Nahrungsmittelfolie für Schrumpfbeutel, **gekennzeichnet durch** folgenden, von außen nach innen gezählten Schichtenaufbau, mit wenigstens sieben Schichten:
a)
- die erste Schicht von außen enthält als Schichtbestandteil ein Polyolefin, vorzugsweise Polyethylen,
- die zweite Schicht von außen enthält als Schichtbestandteil einen Haftvermittler,
- die dritte Schicht von außen enthält als Schichtbestandteil Polyamid,
- die vierte Schicht von außen enthält als Schichtbestandteil EVOH,
- die fünfte Schicht von außen enthält als Schichtbestandteil Polyamid,
- die sechste Schicht von außen enthält als Schichtbestandteil einen Haftvermittler, und
- die siebte Schicht von außen enthält als Schichtbestandteil ein Polyolefin, vorzugsweise Polyethylen,
oder b)
- die erste Schicht von außen enthält als Schichtbestandteil PET,
- die zweite Schicht von außen enthält als Schichtbestandteil einen Haftvermittler,
- die dritte Schicht von außen enthält als Schichtbestandteil Polyamid,
- die vierte Schicht von außen enthält als Schichtbestandteil EVOH,
- die fünfte Schicht von außen enthält als Schichtbestandteil Polyamid,
- die sechste Schicht von außen enthält als Schichtbestandteil einen Haftvermittler, und
- die siebte Schicht von außen enthält als Schichtbestandteil ein Polyolefin, vorzugsweise Polyethylen,
oder c)
- die erste Schicht von außen enthält als Schichtbestandteil ein Polyolefin, vorzugsweise Polyethylen,
- die zweite Schicht von außen enthält als Schichtbestandteil EVA,
- die dritte Schicht von außen enthält als Schichtbestandteil einen Haftvermittler,
- die vierte Schicht von außen enthält als Schichtbestandteil EVOH,
- die fünfte Schicht von außen enthält als Schichtbestandteil einen Haftvermittler,
- die sechste Schicht von außen enthält als Schichtbestandteil EVA, und
- die siebte Schicht von außen enthält als Schichtbestandteil ein Polyolefin, vorzugsweise Polyethylen;
wobei der Schrumpf der Schichtenaufbauten (a), (b) und (c) jeweils wenigstens 20 bis 60 %, vorzugsweise wenigstens 30 bis 50 %, bei einer Wassertemperatur von um 95 °C beträgt.

2. Nahrungsmittelfolie für Schrumpfbeutel nach Anspruch 1, **dadurch gekennzeichnet, daß** Schichten, die ein Polyolefin, vorzugsweise Polypropylen, als Schichtbestandteil enthalten, alternativ auch weitere Polyolefine, Polypropylen, EVA (Ethylen-Vinylacetat), EM(M)A, Ionomere oder Mischungen von diesen oder dergleichen enthalten.

3. Nahrungsmittelfolie für Schrumpfbeutel nach einem der Ansprüche 1 oder 2, **dadurch gekennzeichnet, daß** Schichten, die einen Haftvermittler enthalten, einen Haftvermittler aufweisen, der auf PE, EVA, EM(M)A oder einem Ionomer als Grundstoff basiert.

4. Nahrungsmittelfolie für Schrumpfbeutel nach einem der Ansprüche 1 bis 3, **dadurch gekennzeichnet, daß** Schichten, die einen Haftvermittler als Bestandteil aufweisen alternativ ein Gemisch aus Polyolefin und Haftvermittler oder ein Gemisch aus EVA und/oder EM(M)A und Haftvermittler enthalten.

5. Nahrungsmittelfolie für Schrumpfbeutel nach einem der Ansprüche 1 bis 4, **dadurch gekennzeichnet, daß** Schichten, die Polyamid als Schichtbestandteil aufweisen, Polycaprolactam (PA 6), Polyhexamethylenadipin-amid (PA 66), PA 6/66, PA 11, PA 12 oder Mischungen aus diesen Polyamiden enthalten.

## Claims

1. Multilayered planar or tubular food casing or food film for shrink bags, **characterized by** the following lamination structure with at least seven layers, in order from outside to inside:
a)
- the first layer from the outside, comprising polyolefin, preferably polyethylene as a layer constituent;
- the second layer from the outside, comprising an adhesion promoter as a layer constituent;
- the third layer from the outside, comprising polyamide as a layer constituent;
- the fourth layer from the outside, comprising EVOH as a layer constituent;
- the fifth layer from the outside, comprising polyamide as a layer constituent;
- the sixth layer from the outside, comprising an adhesion promoter as a layer constituent; and
- the seventh layer from the outside, comprising a polyolefine, preferably polyethylene, as a layer constituent;
or b)
- the first layer from the outside, comprising PET as a layer constituent;
- the second layer from the outside, comprising an adhesion promoter as a layer constituent;
- the third layer from the outside, comprising polyamide as a layer constituent;
- the fourth layer from the outside, comprising EVOH as a layer constituent;
- the fifth layer from the outside, comprising polyamide as a layer constituent;
- the sixth layer from the outside, comprising an adhesion promoter as a layer constituent; and
- the seventh layer from the outside, comprising polyolefin, preferably polyethylene, as a layer constituent;
or c)
- the first layer from the outside, comprising polyolefin, preferably polyethylene, as a layer constituent;
- the second layer from the outside, comprising EVA, as a layer constituent;
- the third layer from the outside, comprising an adhesion promoter as a layer constituent;
- the fourth layer from the outside, comprising EVOH as a layer constituent;
- the fifth layer from the outside, comprising an adhesion promoter as a layer constituent;
- the sixth layer from the outside, containing EVA as a layer constituent; and
- the seventh layer from the outside, containing a polyolefin, preferably polyethylene, as a layer constituent;
wherein the shrink of the lamination structures (a), (b) and (c), amounts to at least 20 % through 60 %, preferably at least 30 % to 50 %, at a water temperature of around 95 °C.

2. Food casing for shrink bags according to claim 1, **characterized in that** layers comprising a polyolefin, preferably polypropylene, as a layer constituent, alternatively comprise additional polyolefins, polypropylene, EVA (ethylene vinyl acetate), EM(M)A, ionomers and mixtures thereof or the like.

3. Food casing for shrink bags according to one of claims 1 or 2, **characterized in that** layers comprising an adhesion promoter comprise an adhesion promoter on the basis of PE, EVA, EM(M)A or a ionomer as basic component.

4. Food casing for shrink bags according to one of claims 1 through 3, **characterized in that** layers comprising an adhesion promoter as a layer constituent, alternatively comprise a mixture of polyolefin and adhesion promoter or a mixture of EVA and/or EM(M)A and adhesion promoter.

5. Food casing for shrink bags according to one of claims 1 through 4, **characterized in that** layers comprising polyamide as a layer constituent, comprise polycaprolactam (PA 6), polyhexamethylene adipinamide (PA 66), PA 6/66, PA 11, PA 12 or mixtures of these polyamides.

## Revendications

1. Film alimentaire multicouche planiforme ou tubulaire pour sacs rétractables, **caractérisé par** la structure en couches suivante, énumérées en allant de l'extérieur vers l'intérieur, comprenant au moins sept couches :
a)
- la première couche en partant de l'extérieur comprend comme composant une polyoléfine, de préférence du polyéthylène,
- la deuxième couche en partant de l'extérieur comprend comme composant un adhésif,
- la troisième couche en partant de l'extérieur comprend comme composant du polyamide,
- la quatrième couche en partant de l'extérieur comprend comme composant de l'EVOH,
- la cinquième couche en partant de l'extérieur comprend comme composant du polyamide,
- la sixième couche en partant de l'extérieur comprend comme composant un adhésif, et
- la septième couche en partant de l'extérieur comprend comme composant une polyoléfine, de préférence du polyéthylène,
ou b)
- la première couche en partant de l'extérieur comprend comme composant du PET,
- la deuxième couche en partant de l'extérieur comprend comme composant un adhésif,
- la troisième couche en partant de l'extérieur comprend comme composant du polyamide,
- la quatrième couche en partant de l'extérieur comprend comme composant de l'EVOH,
- la cinquième couche en partant de l'extérieur comprend comme composant du polyamide,
- la sixième couche en partant de l'extérieur comprend comme composant un adhésif, et
- la septième couche en partant de l'extérieur comprend comme composant une polyoléfine, de préférence du polyéthylène,
ou c)
- la première couche en partant de l'extérieur comprend comme composant une polyoléfine, de préférence du polyéthylène,
- la deuxième couche en partant de l'extérieur comprend comme composant de l'EVA,
- la troisième couche en partant de l'extérieur comprend comme composant un adhésif,
- la quatrième couche en partant de l'extérieur comprend comme composant de l'EVOH,
- la cinquième couche en partant de l'extérieur comprend comme composant un adhésif,
- la sixième couche en partant de l'extérieur comprend comme composant de l'EVA, et
- la septième couche en partant de l'extérieur comprend comme composant une polyoléfine, de préférence du polyéthylène ;
le rétrécissement des structures en couches (a), (b) et (c) atteignant respectivement 20 à 60 %, de préférence au moins 30 à 50 %, pour une température de l'eau d'environ 95 °C.

2. Film alimentaire pour sacs rétractables selon la revendication 1, **caractérisé en ce que** les couches qui contiennent une polyoléfine, de préférence du polypropylène, comme composant, contiennent également en variante d'autres polyoléfines, du polypropylène, de l'EVA (éthylène - acétate de vinyle), de l'EM(M)A, des ionomères ou des mélanges de ceux-ci ou similaires.

3. Film alimentaire pour sacs rétractables selon l'une des revendications 1 ou 2, **caractérisé en ce que** les couches qui contiennent un adhésif comprennent un adhésif qui est à base de PE, d'EVA, d'EM(M)A ou d'un ionomère comme substance de base.

4. Film alimentaire pour sacs rétractables selon l'une des revendications 1 à 3, **caractérisé en ce que** les couches qui contiennent un adhésif comme composant comprennent en variante un mélange de polyoléfine et d'adhésif ou un mélange d'EVA et/ou d'EM(M)A et d'adhésif.

5. Film alimentaire pour sacs rétractables selon l'une des revendications 1 à 4, **caractérisé en ce que** les couches qui contiennent du polyamide comme composant comprennent du polycaprolactame (PA 6), du polyhexaméthylène adipamide (PA 66), du PA 6/66, du PA 11, du PA 12 ou des mélanges de ces polyamides.
